# EUROPEAN PATENT APPLICATION

(11) **EP 4 789 999 A1**
(43) Date of publication of application: **12.08.2026**
(21) Application number: 25226600.2
(22) Date of filing: 22.12.2025
(51) Int. Cl.: B65H 43/04, B65H 29/24, B65H 5/08

(54) **APPARATUS AND METHOD FOR INSPECTING STACKING EQUIPMENT**

(30) Priority: 06.02.2025 KR 20250015263
(71) Applicant: SAMSUNG SDI CO., LTD., Yongin-si, Gyeonggi-do 17084 (KR)
(72) Inventor: KO, Hyun Bin, 16678 Suwon-si (KR); CHUNG, Hyun Jong, 16678 Suwon-si (KR); LEE, Sung Won, 16678 Suwon-si (KR)
(74) Representative: Marks & Clerk LLP

(57) **Abstract**

An apparatus (100) and method for inspecting stacking equipment (1) are disclosed. An apparatus for inspecting stacking equipment includes a vacuum sensor (140) which is installed on a transfer device of the stacking equipment and configured to detect a vacuum signal representing a degree of adsorption of a sheet (10), a camera (160) configured to capture an image of the stacking equipment, and a processor configured to analyze the vacuum signal input in real time during a process in which the sheet is transferred by the transport device to detect an abnormality in a transfer process of the stacking equipment and may analyze image data captured by the camera based on a time point when the abnormality is detected to analyze a cause of the abnormality.

## Description

### BACKGROUND

### 1. Field

Aspects of embodiments of the present disclosure relate to an apparatus and method for inspecting stacking equipment.

### 2. Description of the Related Art

To check abnormalities in manufacturing equipment during a secondary battery manufacturing process, a time series data analysis method using high-speed analog data may be used.

To detect the abnormalities in equipment using the time series data analysis method, an "edge device" for acquiring high-speed analog data is installed in the equipment, and the acquired high-speed (a sampling rate of 1 kHz or more) data is analyzed.

However, the time series data analysis method has a problem that the accuracy of abnormality detection is low because it is difficult to match high-speed data over time with a current state of the equipment.

In addition, the time series data analysis method has a problem that it takes a long time to analyze because it is difficult to visualize the current state of the equipment at a time point of occurrence of abnormal data among a large amount of data.

The above information disclosed in this Background section is for enhancement of understanding of the background of the present disclosure, and, therefore, it may contain information that does not constitute related art.

### SUMMARY

According to an aspect of embodiments of the present disclosure, an apparatus and method for inspecting stacking equipment, which detect an abnormality in equipment based on a vacuum signal and determine a cause of the abnormality by checking a state of the equipment if the abnormality occurs are provided.

According to another aspect of embodiments of the present disclosure, an apparatus and method for inspecting stacking equipment, which monitor a state of the stacking equipment and detect an abnormality in a secondary battery manufacturing process are provided.

However, aspects and objects that the present disclosure achieves are not limited to the above-described aspects and objects, and other aspects and objects that are not described may be clearly understood by those skilled in the art from the following description.

According to one or more embodiments of the present disclosure, an apparatus for inspecting stacking equipment includes a vacuum sensor which is installed on a transfer device of the stacking equipment and configured to detect a vacuum signal representing a degree of adsorption of a sheet, a camera configured to capture an image of the stacking equipment, and a processor configured to analyze the vacuum signal input in real time during a process in which the sheet is transferred by the transport device to detect an abnormality in a transfer process of the stacking equipment and may analyze image data captured by the camera based on a time point when the abnormality is detected to analyze a cause of the abnormality.

The processor may be configured to filter a one-cycle signal of the vacuum signal to extract valid data and calculate at least one of a maximum value, a minimum value, and an average value for the valid data.

The processor may be configured to extract the vacuum signal from a time point when the adsorption of the sheet is completed to a time point when the sheet is separated from the transfer device in the transfer process as the valid data.

The processor may be configured to compare one of the maximum value, the minimum value, and the average value with a threshold value and detect the abnormality in the transfer process.

The processor may be configured to determine that the transfer process is normal when one of the maximum value, the minimum value, and the average value is greater than or equal to the threshold value and determine that the transfer process is defective when the one of the maximum value, the minimum value, and the average value is less than the threshold value.

The processor may be configured to compare the maximum value with a threshold value for the maximum value, compare the minimum value with a threshold value for the minimum value, compare the average value with a threshold value for the average value, and then detect the abnormality in the transfer process based on comparison results.

The processor may be configured, if the abnormality in the transfer process is detected, to analyze the image data for a predetermined time based on the time point when the abnormality is detected, detect a shape of the stacking equipment or the sheet from the image data, and determine the cause of the abnormality.

The processor may be configured to analyze a vacuum signal of a first vacuum sensor installed on a first transfer device that transfers the sheet from an out belt to an alignment table and analyze a vacuum signal of a second vacuum sensor installed on a second transfer device that transfers the sheet from the alignment table to a stacking table.

According to one or more embodiments of the present disclosure, a method of inspecting stacking equipment includes analyzing, by a processor, a vacuum signal input in real time from a vacuum sensor installed on stacking equipment during a process of transferring a sheet, detecting, by the processor, an abnormality in a transfer process of the stacking equipment based on the analysis result of the vacuum signal, and analyzing, by the processor, image data captured by a camera based on a time point when the abnormality has been detected to analyze a cause of the abnormality.

The analyzing of the vacuum signal may include analyzing, by the processor, a vacuum signal of a first vacuum sensor installed on a first transfer device that transfers the sheet from an out belt to an alignment table, and analyzing, by the processor, a vacuum signal of a second vacuum sensor installed on a second transfer device that transfers the sheet from the alignment table to a stacking table.

In the analyzing of the vacuum signal, the processor may receive the vacuum signal in real time from a signal acquisition device which is connected to the vacuum sensor and process the vacuum signal at high speed.

The analyzing of the vacuum signal may include filtering, by the processor, a one-cycle signal of the vacuum signal, extracting valid data, and calculating, by the processor, at least one of a maximum value, a minimum value, and an average value for the valid data.

In the extracting of the valid data, the processor may extract the vacuum signal from a time point when adsorption of the sheet is completed to a time point when the sheet is separated from the first transfer device or the second transfer device in the transfer process as the valid data.

In the detecting of the abnormality in the transfer process, the processor may compare one of the maximum value, the minimum value, and the average value with a threshold value and detect the abnormality in the transfer process.

In the detecting of the abnormality in the transfer process, the processor may determine that the transfer process is normal if one of the maximum value, the minimum value, and the average value is greater than or equal to the threshold value and determine that the transfer process is defective if the one of the maximum value, the minimum value, and the average value is less than the threshold value.

In the detecting of the abnormality in the transfer process, the processor may compare the maximum value with a threshold value for the maximum value, compare the minimum value with a threshold value for the minimum value, compare the average value with a threshold value for the average value, and then detect the abnormality in the transfer process based on comparison results.

The analyzing of the cause of the abnormality may include analyzing, by the processor, the image data for a certain time based on the time point when the abnormality is detected when the abnormality in the transfer process is detected, detecting, by the processor, a shape of the stacking equipment or the sheet from the image data, and determining, by the processor, a cause of the detected abnormality based on the shape of the stacking equipment or the sheet.

At least some of the above and other features are set out in the claims.

### BRIEF DESCRIPTION OF THE DRAWINGS

The following drawings included with this specification illustrate some embodiments of the present disclosure, and further illustrate aspects and features of the present disclosure together with the detailed description of the present disclosure. However, the present disclosure is not to be construed as being limited to the drawings:
FIG. 1 is a view showing a configuration of stacking equipment and an inspection apparatus according to an embodiment of the present disclosure;
FIG. 2 is a schematic block diagram showing a control configuration of the apparatus for inspecting stacking equipment according to an embodiment of the present disclosure;
FIG. 3 is a schematic view showing a primary sheet transfer process among a manufacturing process of the stacking equipment according to an embodiment of the present disclosure;
FIG. 4 is a schematic view showing a secondary sheet transfer process among a manufacturing process of the stacking equipment according to an embodiment of the present disclosure;
FIG. 5 is a view showing a vacuum signal measured during a sheet transfer process of the stacking equipment according to an embodiment of the present disclosure;
FIG. 6 is a view showing a vacuum signal according to a state of the stacking equipment according to an embodiment of the present disclosure;
FIG. 7 is a view showing a vacuum signal according to the primary sheet transfer process according to an embodiment of the present disclosure;
FIG. 8 is a view showing a vacuum signal according to the secondary sheet transfer process according to an embodiment of the present disclosure;
FIG. 9 is a flowchart showing an inspection method of the apparatus for inspecting a stacking equipment according to an embodiment of the present disclosure;
FIG. 10 is a view showing a change in vacuum signal due to a double sheet according to an embodiment of the present disclosure;
FIGS. 11A and 11B are views showing an equipment state for the double sheet according to an embodiment of the present disclosure;
FIG. 12 is a view showing a change in vacuum signal due to sheet rotation according to an embodiment of the present disclosure; and
FIGS. 13A and 13B are views showing an equipment state for sheet rotation according to an embodiment of the present disclosure.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some embodiments of the present disclosure and do not necessarily represent all of the technical ideas, aspects, and features of the present disclosure. Accordingly, it is to be understood that there may be various equivalents and modifications that can replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein are to be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part can be directly connected to another part or one or more intervening parts may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

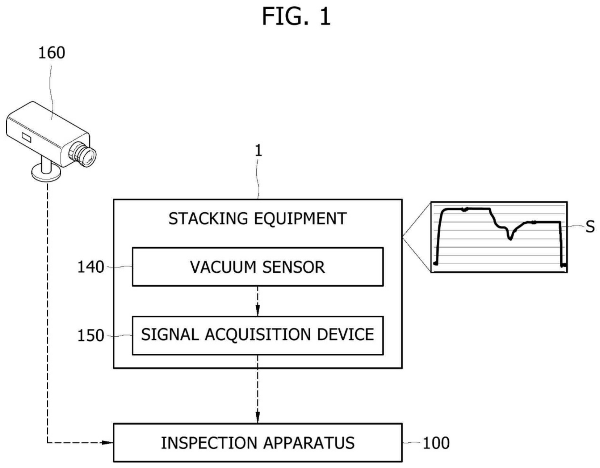

FIG. 1 is a view showing a configuration of stacking equipment and an inspection apparatus according to an embodiment of the present disclosure.

Referring to FIG. 1, an apparatus 100 for inspecting stacking equipment (herein referred to as an inspection apparatus) according to an embodiment of the present disclosure receives a vacuum signal in real time through a vacuum sensor 140 and a signal acquisition device 150 installed in stacking equipment 1 and detects an abnormality in the stacking equipment 1 when a sheet of stacking equipment 1 is suctioned.

In addition, the inspection apparatus 100 may check an image if the abnormality is detected based on an image acquired from a camera 160 for capturing an image of the stacking equipment 1 and analyze the abnormality in the stacking equipment 1 and its cause.

In an embodiment, the signal acquisition device 150 is connected to the vacuum sensor 140 and processes a signal detected from the vacuum sensor 140 at high speed and inputs the signal to the inspection apparatus 100 in real time. The signal acquisition device 150 may acquire high-speed (sampling rate of 1 kHz or more) data.

A data acquisition (DAQ) device may be used as the signal acquisition device 150. The signal acquisition device 150 may be connected to a plurality of vacuum sensors 140 to acquire a vacuum signal. The signal acquisition device 150 may acquire a signal of a vacuum value of about 15 to 18 mA (-70 kPa to -88 kPA) based on a normal signal from the vacuum sensor 140.

The inspection apparatus 100 calculates the pressure from the vacuum signal input from the signal acquisition device 150 and detects an abnormality in equipment in response to the pressure. In particular, the inspection apparatus 100 may detect the abnormality in equipment by detecting the degree of sheet adsorption (e.g. by way of suction) of pick and place (PnP) equipment through the vacuum sensor 140 during the process of transferring the sheet.

In addition, the inspection apparatus 100 may analyze an image if an abnormality is detected in conjunction with the camera 160 and analyze the abnormality in the stacking equipment 1. The inspection apparatus 100 may analyze the image or compare the image with an image in a normal state and determine the cause of the abnormality.

Accordingly, the inspection apparatus 100 may output the analysis result of the abnormality detection and cause and transmit the analysis result to a terminal of a person in charge or a server related to the abnormality that has occurred.

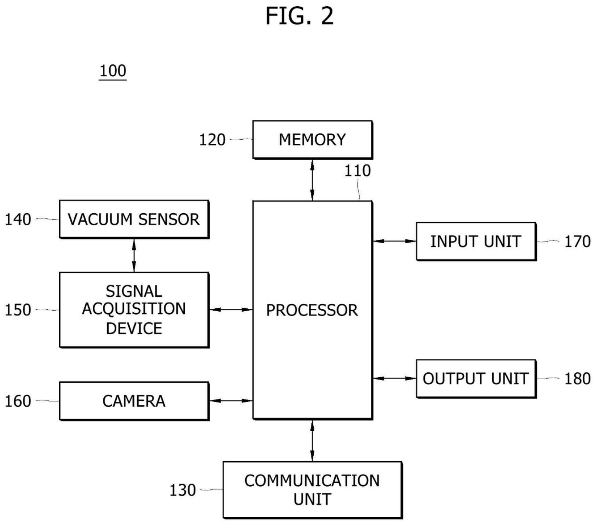

FIG. 2 is a schematic block diagram showing a control configuration of the apparatus for inspecting stacking equipment according to an embodiment of the present disclosure.

Referring to FIG. 2, the inspection apparatus 100 of the present disclosure may include a memory 120, a communication unit 130, the vacuum sensor 140, the signal acquisition device 150, the camera 160, an input unit 170, an output unit 180, and a processor 110.

The memory 120 may store image data acquired through the camera 160, vacuum signal data input from the signal acquisition device 150, reference data for abnormality detection of the stacking equipment 1, feature values for the vacuum signal data, three-dimensional (3D) modeling data for the stacking equipment, and analysis result data for the vacuum signal and the image.

In an embodiment, the memory 120 may store data related to at least one of a signal analysis algorithm, an image processing algorithm, a feature value calculation algorithm, an abnormal signal detection algorithm, an image analysis algorithm, a data synchronization algorithm, and a 3D modeling algorithm.

For example, the memory 120 may include a non-volatile memory, such as a random access memory (RAM), a read only memory (ROM), an electrically erasable programmable ROM (EEPROM), etc., a flash memory, and a storage unit such as a hard disk drive (HDD), a solid state drive (SSD), a software-defined storage (SDS), etc.

In an embodiment, the inspection apparatus 100 may include a database (DB) (not shown) and store a large amount of vacuum signal data and image data in the database DB.

The communication unit 130 allows data of units to be transmitted to and received from each other. The communication unit 130 may be connected to the signal acquisition device 150 and receive the vacuum signal of the vacuum sensor 140.

In an embodiment, the communication unit 130 may communicate with an external server or a terminal in response to a control command of the processor 110. For example, the communication unit 130 may perform communication through wireless communication methods such as Wi-Fi, Bluetooth, ZigBee, mobile communication (LTE or 5G), etc., and perform communication using wired communication methods such as serial communication, Ethernet, power line communication, etc.

The vacuum sensor 140 is installed on the PnP equipment, which is a transfer device of the stacking equipment 1 and detects the degree (strength) of the sheet adsorption of the PnP equipment. The vacuum sensor 140 may include a first vacuum sensor and a second vacuum sensor which are installed on a first PnP device and a second PnP device, respectively.

The vacuum sensor 140 is connected to the signal acquisition device 150 and transmits the detected vacuum signal to the signal acquisition device 150.

The signal acquisition device 150 may receive a vacuum signal from the vacuum sensor 140 installed on each of the first PnP device and the second PnP device and transmits the vacuum signal to the processor 110. The signal acquisition device 150 may acquire and process data at high speed and transmit the data to the processor 110. The signal acquisition device 150 may receive a vacuum signal in mA units and convert the vacuum signal into a pressure value.

In an embodiment, the camera 160 is installed as a plurality of cameras to capture an image of the stacking equipment 1. The camera 160 may monitor the operation of the stacking equipment 1 and devices within the stacking equipment 1. In an embodiment, a closed-circuit television (CCTV) may be used as the camera 160.

The input unit 170 may receive user data by including at least one of a button, a switch, and a touchpad.

In an embodiment, the output unit 180 may include at least one of a speaker, an operation lamp, and a display. The output unit 180 may display image data and vacuum signal data acquired from the camera 160 on a display screen, and if an abnormality is detected, the output unit 180 may output a warning message through the display or output a warning sound through the speaker. In an embodiment, the output unit 180 may output at least one of a sound effect, a warning sound, and a voice guidance during the inspection process.

In an embodiment, the processor 110 may include at least one microprocessor and operate based on the data and an algorithm stored in the memory 120.

The processor 110 manages data transmitted and received through the communication unit 130, data input through the input unit 170, and data output through the output unit 180 and manages the data stored in the memory 120.

The processor 110 may analyze the corresponding signal when receiving the vacuum signal of the vacuum sensor 140 through the signal acquisition device 150 to detect an outlier, and if an abnormality is detected, the processor 110 analyzes image data when the outlier occurred among image data for the stacking equipment 1 to analyze the cause of the abnormality. In an embodiment, the processor 110 filters the signal to remove unnecessary signals, detects valid data, and determines whether an abnormality in the process is present based on a threshold value.

The processor 110 may monitor a process in which a sheet is transferred and a jelly roll is formed in the stacking equipment 1 in real time based on the vacuum signal and call the data of a cycle to be inspected among a plurality of cycles by setting the process of transferring one sheet as one cycle.

The processor 110 may detect an abnormality by monitoring each of the vacuum signal measured at the first PnP device and the vacuum signal measured at the second PnP device.

In an embodiment, the processor 110 removes rising and falling sections of the signal using a high-pass filter and a low-pass filter and extracts a signal of the remaining section as valid data. The processor 110 may extract valid data from a time point when the adsorption of the sheet 10 is completed to a time point when the sheet 10 is separated from the PnP device.

In an embodiment, the processor 110 calculates the maximum, minimum, and average values of the valid data and compares the values with preset threshold values and determines whether the values are normal or defective.

In an embodiment, the processor 110 may compare one of the maximum, minimum, and average values of the valid data with the threshold value and determine whether the transfer process of the stacking equipment is normal.

In addition, the processor 110 may compare a threshold value for the maximum value, a threshold value for the minimum value, and a threshold value for the average value with the maximum, minimum, and average values of the valid data, respectively, and determine whether the transfer process of the stacking equipment is normal.

If the processor 110 determines that the transfer process of the stacking equipment 1 is defective, the processor 110 may determine that the transfer process of the stacking equipment 1 is abnormal. The processor 110 may extract an outlier, analyze image data at the time point if the abnormality occurs among the image data of the camera 160, and analyze the cause of the abnormality.

The processor 110 may analyze the image data based on the time and position of the outlier. In an embodiment, the processor 110 may analyze all the image data from n hours before the time point when the abnormality occurred to n hours after the time point when the abnormality occurred.

If the abnormality occurs, the processor 110 may generate at least one of a warning message, a warning sound, a warning light, and a warning voice and output them through the output unit 180.

In addition, the processor 110 may output the analysis result through the output unit 180. The processor 110 may output the vacuum signal including the outlier and the related image data together with the analysis result through the output unit 180.

In an embodiment, the processor 110 learns image data through an artificial intelligence model based on a neural network, 3D-models the stacking equipment 1, and uses the 3D modeling of the stacking equipment 1 when detecting the abnormality or outputting the analysis result. For example, the processor 110 may visualize and output the state of the stacking equipment 1 according to the vacuum signal using the 3D modeling when the abnormality occurs.

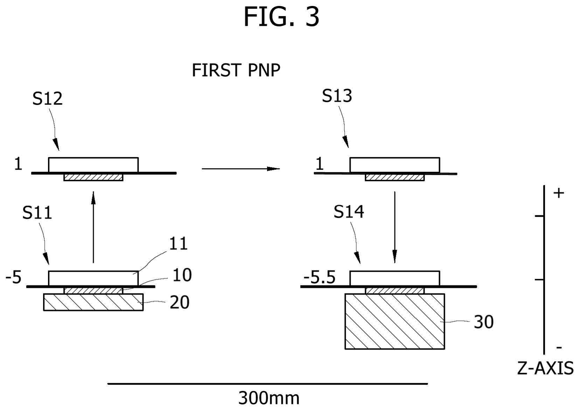

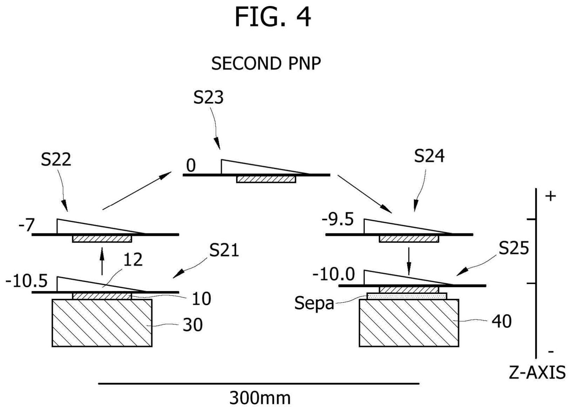

FIG. 3 is a schematic view showing a primary sheet transfer process among a manufacturing process of the stacking equipment according to an embodiment of the present disclosure; and FIG. 4 is a schematic view showing a secondary sheet transfer process among a manufacturing process of the stacking equipment according to an embodiment of the present disclosure.

Referring to FIG. 3, the stacking equipment 1 may perform a process of stacking a sheet coated with a positive electrode or negative electrode material and a separator that prevents or substantially prevents contact between the two sheets and form a jelly roll by stacking the sheets and the separator in the order of separator-negative electrode sheet-separator-positive electrode sheet. In this case, the jelly roll is an electrode assembly that is rolled in the form of a roll by bonding positive/negative electrode plates and a separator to form a cell, which is a basic unit of a battery.

The stacking equipment 1 may include an out belt 20, an alignment table 30, a stacking table 40, a first PnP device 11 (a first transfer device), and a second PnP device 12 (a second transfer device).

The stacking equipment 1 arranges a separator Sepa on the stacking table 40 and moves a positive electrode sheet or a negative electrode sheet transferred through the out belt 20 to the alignment table 30 using the first PnP device 11.

The first PnP device 11 adsorbs a sheet 10 located on the out belt 20 (S11) and lifts and moves the sheet 10 upward (S12). When the sheet is adsorbed (S11), the first PnP device 11 is in a downward movement state, and, thus, an X-axis position of the first PnP device 11 is 0, and a Z-axis position thereof is -5. After the first PnP device 11 lifts the sheet 10 (S12), the X-axis position of the first PnP device 11 is 0, and the Z-axis position thereof is 1.

The first PnP device 11 moves to the position of the alignment table 30 (S13). The Z-axis position of the first PnP device 11 is maintained as 1 but moves about 300 mm along the X-axis, and the X-axis position becomes 300.

When reaching the position of the alignment table 30, the first PnP device 11 may move downward, separate the adsorbed sheet 10, and move the sheet 10 to the alignment table 30 (S14). The X-axis position of the first PnP device 11 maintains the position 300 changed in the previous operation, and the Z-axis position thereof becomes -5.5 depending on a height of the alignment table 30.

The vacuum sensor 140 may measure the degree of adsorption (adsorption strength) when the first PnP device 11 adsorbs the sheet 10. The signal measured through the vacuum sensor 140 is a current value, and the processor may change the current value into a corresponding pressure value.

The stacking equipment 1 may inspect the sheet 10 transferred to the alignment table 30.

Referring to FIG. 4, when the inspection is completed, the stacking equipment 1 moves the positive electrode sheet or negative electrode sheet of the alignment table 30 to the stacking table 40 through the second PnP device 12. In an embodiment, the stacking equipment 1 forms a jelly roll by sequentially stacking the separator and the sheet on the stacking table 40 through the second PnP device 12.

The stacking equipment 1 adsorbs the sheet 10 located on the alignment table 30 through the second PnP device 12 (S21), moves upward (S22), and moves toward the stacking table 40 (S23). In an embodiment, when the sheet 10 is adsorbed (S21), the X-axis position of the second PnP device 12 is 0, and the Z-axis position thereof is -10.5. When the Z-axis position reaches about -7 during the upward movement, the second PnP device 12 may move in the X-axis direction while moving upward to a Z-axis position of 0. The second PnP device 12 may move to the stacking table 40 by moving downward to a Z-axis position of -9.5 after moving upward to a Z-axis position of 0 while moving upward from the stacking table 40. When reaching a position above the stacking table 40 (S24), the stacking equipment 1 moves downward to stack the sheet on the stacking table 40. After moving from a Z-axis position of -9.5 to -10, the second PnP device 12 may separately stack the adsorbed sheet 10 on the stacking table 40.

In an embodiment, a reference value for position control of the second PnP device 12 differs from a reference value for position control of the first PnP device 11, and the Z-axis position may be displayed differently.

In an embodiment, when the sheet moves to the stacking table 40, the stacking equipment 1 may form a jelly roll by installing a separator and re-transferring the sheet to sequentially stack the sheets.

The vacuum sensor 140 may also be installed on the second PnP device 12. In an embodiment, the vacuum sensor 140 detects a vacuum signal for the entire process from the time point when the PnP adsorbs the sheet 10 to the time point when the sheet 10 is moved to the stacking table 40. The first vacuum sensor detects the vacuum signal through the first PnP device 11, and the second vacuum sensor is installed on the second PnP device 12 to detect the vacuum signal.

The stacking equipment 1 may discharge the jelly roll through an unloader (not shown) when an amount (e.g., a predetermined amount) of sheets and separators are stacked on the stacking table 40 to form the jelly roll.

In an embodiment, the first vacuum sensor and the second vacuum sensor are each connected to the signal acquisition device 150 to transmit the detected vacuum signal to the signal acquisition device 150.

The signal acquisition device 150 may acquire data at high speed using sensing software (SW) installed therein. The sensing software may collect data at a set time point by connecting and setting each hardware channel through communication of the signal acquisition device 150.

In an embodiment, the signal acquisition device 150 may store all data in the form of a time series database or CSV file. In an embodiment, if the vacuum signal is a normal signal, the detected data is set within the range of about 15 to 18 mA, and pressure is in a range from -70 kPa to -88 kPA.

The signal acquisition device 150 inputs the acquired vacuum signal to the inspection apparatus 100.

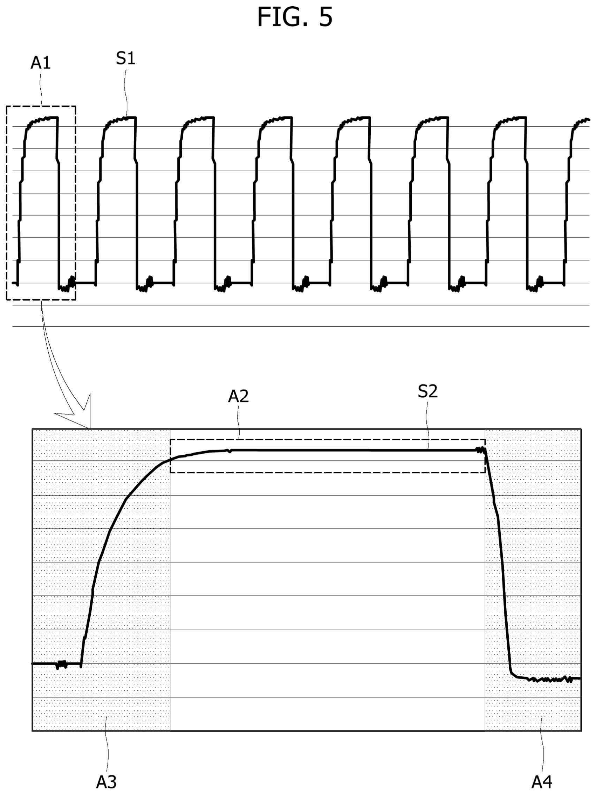

FIG. 5 is a view showing a vacuum signal measured during a sheet transfer process of the stacking equipment according to an embodiment of the present disclosure.

Referring to FIG. 5, the inspection apparatus 100 detects an abnormality in the process by receiving and analyzing the vacuum signal S1.

A time point from when the PnP device (transfer device) adsorbs the sheet and moves to a destination until the sheet is stacked is defined as one cycle A1, and the rise and fall of the vacuum signal S1 are repeated. In this case, an x-axis of a graph for the vacuum signal S1 is time, and a y-axis thereof is a vacuum value (current).

The processor 110 may analyze the vacuum signal S1 in units of one cycle A1. The processor 110 uses a filter to remove a section A3 in which the signal rises and a section A4 in which the signal falls in the signal of one cycle A1. The processor 110 extracts a section in which the signal value is greater than or equal to a certain (e.g. predetermined) magnitude from a signal S2 of one cycle A1 as valid data A2. In an embodiment, the processor 110 may extract a signal from a time point when the PnP device completes adsorbing the sheet 10 until the sheet 10 is separated from the PnP device as valid data A2.

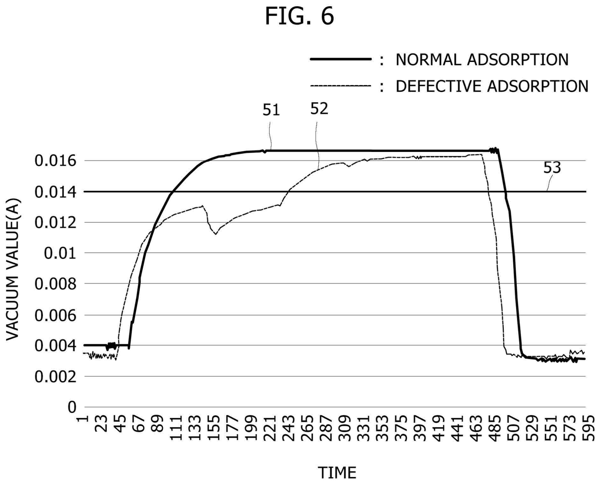

FIG. 6 is a view showing a vacuum signal according to a state of the stacking equipment according to an embodiment of the present disclosure. In this case, the x-axis of the graph for the vacuum signal is time, and the y-axis thereof is a vacuum value (current).

Referring to FIG. 6, the processor 110 calculates a feature value for the valid data A2. The processor 110 may calculate the maximum, minimum, and average values of the valid data A2.

The processor 110 may compare one of the maximum, minimum, and average values with a preset threshold value and determine whether the transfer process is abnormal. For example, the processor 110 may compare the average value with the threshold value and determine whether the transfer process is abnormal.

In addition, the processor 110 may set threshold values for the maximum, minimum, and average values, compare the maximum value with the threshold value for the maximum value, compare the minimum value with the threshold value for the minimum value, and compare the average value with the threshold value for the average value. The processor 110 may comprehensively analyze the respective comparison results and determine whether the transfer process is abnormal.

The processor 110 may determine that the transfer process is normal when the set feature value is greater than or equal to a specified threshold value 53 and determine that the transfer process is defective if the set feature value is smaller than the specified threshold value.

As shown, if the adsorption is normal, the vacuum signal 51 is measured as having valid data exceeding the threshold value 53, and if the adsorption is defective, the vacuum signal 52 is measured as having valid data smaller than the threshold value 53.

Accordingly, the processor 110 may determine that the transfer process is abnormal if the valid data is smaller than the threshold value.

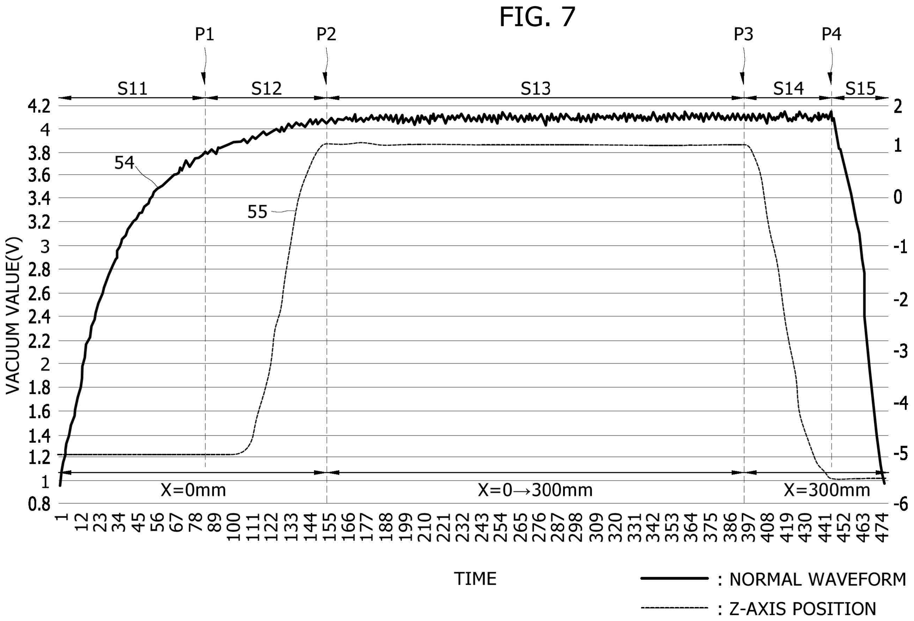

FIG. 7 is a view showing a vacuum signal according to the primary sheet transfer process according to an embodiment of the present disclosure. In this case, the x-axis of the graph is time, the y-axis is a vacuum value (voltage), and the z-axis is the Z-axis position of the first PnP device 11. In addition, a first graph 54 is a vacuum signal 54 showing a change in vacuum value over time, and a second graph 55 is a view showing the Z-axis position of the first PnP device 11.

Referring to FIG. 7, during the first sheet transfer process in which the sheet 10 is transferred by the first PnP device 11, a measured value of the vacuum signal 54 increases during the process in which the sheet 10 is adsorbed and decreases during the process in which the sheet 10 is separated from the PnP device. In this case, the vacuum signal 54 relates to a case in which the sheet 10 is normally adsorbed and transferred to the first PnP device 11.

In FIG. 3, in the first operation S11 in which the first PnP device 11 adsorbs the sheet 10 from the out belt 20, the measured value of the vacuum signal 54 increases. In the second operation S12 in which the first PnP device 11 adsorbs the sheet 10 and moves upward, the sheet 10 is adsorbed by the first PnP device 11. Accordingly, the measured value of the vacuum signal 54 increases from a first point P1 to a second point P2, and the adsorption of the sheet 10 is completed at the second point P2. In this case, in the first operation S11, the X-axis position of the first PnP device 11 is 0 and the Z-axis position is -5. In the second operation S12, the first PnP device 11 moves upward after adsorbing the sheet, and the Z-axis position continuously changes and becomes 1.

In the third operation S13 in which the first PnP device 11 transfers the sheet 10, the sheet 10 may maintain the adsorption state, and, thus, as the pressure is maintained, the vacuum signal 54 may also be maintained at a constant level. At a third point P3 at which the third operation S13 is finished, the vacuum signal 54 maintains a certain (e.g., predetermined) magnitude. In this case, as the first PnP device 11 moves to the alignment table 30, the Z-axis position may be maintained as 1 and may move about 300 mm in the X-axis direction.

In the fourth operation S14 in which the first PnP device 11 separates the sheet 10 and places the sheet 10 on the alignment table 30, the vacuum signal 54 is maintained until the sheet 10 is separated from the first PnP device 11.

Thereafter, in a fifth operation S15 in which the sheet 10 is separated, the measured value of the vacuum signal 54 decreases. In an embodiment, the first PnP device 11 moves downward in the fourth operation S14, and the X-axis position is 0 and the Z-axis position decreases and changes from 1 to -5.

The inspection apparatus 100 may extract the second point P2 to the fourth point P4 as valid data for the vacuum signal 54.

In this case, a Z-axis movement amount 55 of the sheet 10 rises from the first point P1 to the second point P2, and the first PnP device 11 stops rising and moves horizontally, and, thus, the Z-axis movement amount 55 up to the third point P3 is maintained. Thereafter, the first PnP device 11 moves downward from the third point P3 to the fourth point P4, and the Z-axis movement amount 55 decreases.

The sheet 10 is separated from the first PnP device 11 at the fourth point P4 and moves onto the alignment table 30.

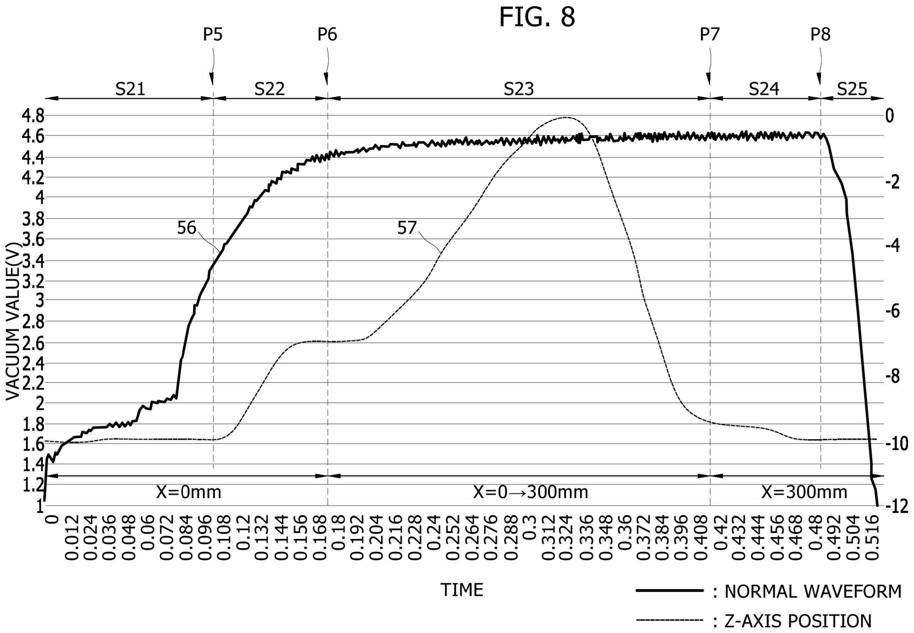

FIG. 8 is a view showing a vacuum signal according to the secondary sheet transfer process according to an embodiment of the present disclosure. In this case, the x-axis of the graph is time, the y-axis is a vacuum value (voltage), and the z-axis is the Z-axis position of the first PnP device 11. In addition, a third graph 56 is a vacuum signal 56 showing a change in vacuum value over time, and a fourth graph 57 is a view showing the Z-axis position of the second PnP device 12.

Referring to FIG. 8, during the secondary sheet transfer process in which the sheet 10 is transferred by the second PnP device 12, a measured value of the vacuum signal 56 increases during the process in which the sheet 10 is adsorbed and decreases during the process in which the sheet 10 is separated. In this case, the vacuum signal 56 relates to a case in which the sheet 10 is normally adsorbed and transferred to the second PnP device 12.

In FIG. 4, in a sixth operation S21 in which the second PnP device 12 adsorbs the sheet 10 on the alignment table 30, the measured value of the vacuum signal 56 increases. In a seventh operation S22 in which the second PnP device 12 adsorbs the sheet 10 and moves upward, the sheet 10 is adsorbed by the second PnP device 12. Accordingly, the measured value of the vacuum signal 56 increases from a fifth point P5 to a sixth point P6, and the adsorption of the sheet 10 is completed at the sixth point P6. In this case, the Z-axis position of the second PnP device 12 is -10 in the sixth operation S21 and moves upward to -7 in the seventh operation S22.

In the eighth operation S23 in which the second PnP device 12 transfers the sheet 10, the sheet 10 may maintain the adsorption state, and, thus, as the pressure is maintained, the vacuum signal 56 may also maintain a constant magnitude. At a seventh point P7 at which the eighth operation S23 is finished, the vacuum signal 56 maintains a certain (e.g., predetermined) magnitude.

In the eighth operation S23, the Z-axis position of the second PnP device 12 moves upward to 0 and then moves downward again such that, in a ninth operation S24, the Z-axis position becomes -9.5. In an embodiment, the second PnP device 12 moves upward and moves in the X-axis direction, and the X-axis position changes from 0 to 300.

In the ninth operation S24 in which the second PnP device 12 moves downward to separate the sheet 10 from the stacking table 40, the vacuum signal 56 is maintained until an eighth point P8 at which the sheet 10 is separated from the second PnP device 12. Thereafter, in a tenth operation S25 in which the sheet 10 is separated, the magnitude of the vacuum signal 56 decreases. In the tenth operation S25, the Z-axis position of the second PnP device 12 becomes -10 through the downward movement.

The inspection apparatus 100 may extract the sixth point P6 to the eighth point P8 as valid data for the vacuum signal 56.

In an embodiment, the Z-axis movement amount 57 of the sheet 10 is maintained constantly until the fifth point P5, then rises from the fifth point P5, remains constant adjacent to the sixth point P6, rises to the highest point in the eighth operation, and then falls. The Z-axis movement amount 57 falls to the seventh point P7. In this case, the sheet 10 may be separated from the eighth point P8.

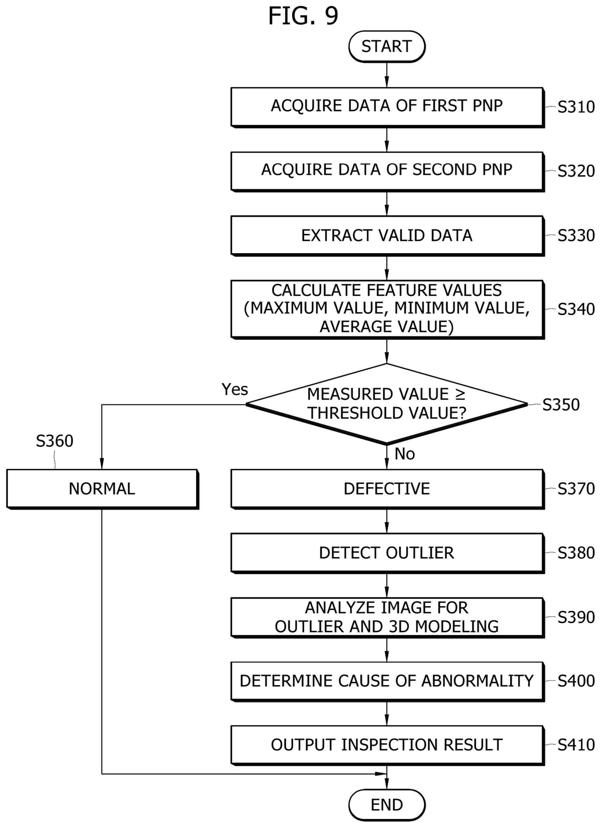

FIG. 9 is a flowchart showing an inspecting method of the apparatus for inspecting stacking equipment according to an embodiment of the present disclosure.

Referring to FIG. 9, the inspection apparatus 100 receives a vacuum signal detected by a vacuum sensor installed on the first PnP device 11 of the stacking equipment 1 through the signal acquisition device 150 (S310). In addition, the inspection apparatus 100 may receive a vacuum signal detected by a vacuum sensor installed on the second PnP device 12 of the stacking equipment 1 through the signal acquisition device 150 (S320).

The processor 110 extracts valid data for each cycle of the vacuum signal (S330) and calculates feature values for the valid data (S340). The processor 110 may calculate maximum, minimum, and average values for the valid data as feature values.

The processor 110 compares the measured value of the vacuum signal with a threshold value (e.g., preset threshold value) (S350) and determines that the process is normal if the measured value is greater than or equal to the threshold value (S360). The processor 110 may compare one of the maximum, minimum, and average values with the threshold value. In addition, the processor 110 may set threshold values for the maximum, minimum, and average values, compare the maximum value with the threshold value for the maximum value, compare the minimum value with the threshold value for the minimum value, compare the average value with the threshold value for the average value, and then determine whether the process is abnormal by comprehensively analyzing comparison results.

If the measured value of the vacuum signal is smaller than the threshold value, the processor 110 may determine that the transfer process is defective (S370).

The processor 110 detects an outlier based on a point at which the value of the valid data of the vacuum signal is smaller than the threshold value (S380).

The processor 110 may analyze the image data at the corresponding time point based on the outlier or analyze the 3D modeling (S390). The processor 110 may analyze the image data at the same time as the time of the outlier or analyze all the image data from a time before a certain (e.g., predetermined) time (n hours) from the time of the outlier to a certain (e.g., predetermined) time after the time of the outlier.

The processor 110 analyzes the image data to determine the cause of the abnormality (S400). The processor 110 outputs the analysis result of the image data for the outlier through the output unit 180 (S410). In an embodiment, the processor 110 may learn the image data through an artificial intelligence model based on a neural network, 3D-model the stacking equipment and output a 3D model of the stacking equipment together with the analysis result. In an embodiment, the processor 110 may generate and output a 3D modeling of states of the stacking equipment 1 and the sheet 10 in which an abnormality has occurred based on the neural network model using the detected data and the image data, thereby visualizing and outputting the cause of the abnormality.

Accordingly, the inspection apparatus 100 of the present disclosure can quickly detect an abnormality occurring during the process of transferring the sheet 10, analyze the cause, and respond to the analysis result.

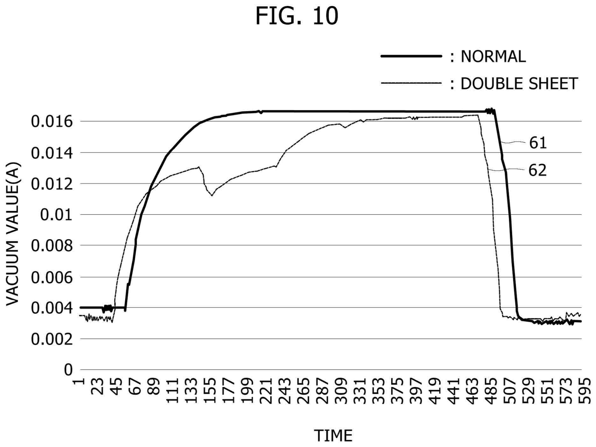

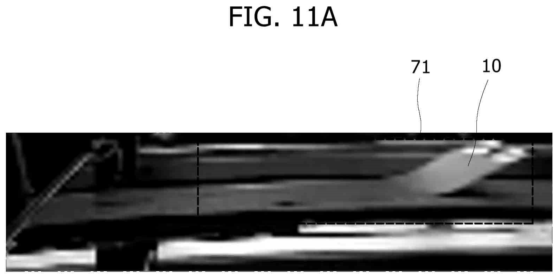

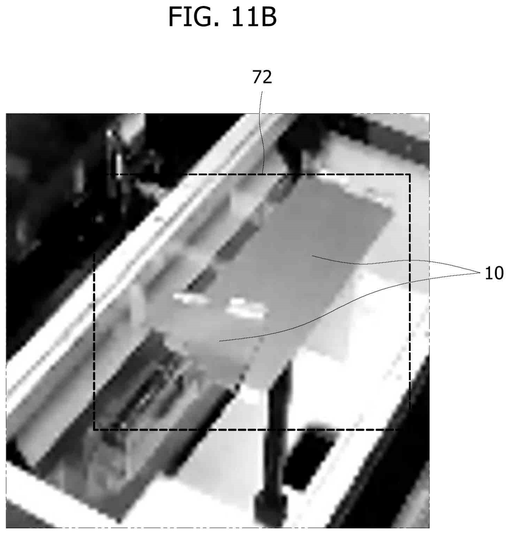

FIG. 10 is a view showing a change in vacuum signal due to a double sheet according to an embodiment of the present disclosure; and FIGS. 11A and 11B are views showing an equipment state for the double sheet according to an embodiment of the present disclosure.

Referring to FIG. 10, during the process in which the PnP device adsorbs and transfers the sheet 10, the processor 110 may determine whether the process is abnormal based on vacuum signals 61 and 62. In this case, an x-axis of a graph for the vacuum signals 61 and 62 is time, and a y-axis thereof is a vacuum value (current).

For example, in the normal case, the vacuum signal 61 is maintained at a constant level after the pressure increases. The processor 110 may determine that the process is normal because the valid data exceeds the threshold value.

In a case in which a double sheet phenomenon in which two sheets are transferred at once occurs, a value of the vacuum signal 62 may be measured as a value smaller than the threshold value because the sheet 10 is not normally adsorbed by the PnP device.

The processor 110 may determine that the process is defective, extract an outlier, and check the image data of the corresponding time. In an embodiment, the processor may determine that there is an abnormality in a section from 133 seconds to 265 seconds and check the image data of the corresponding section.

The processor 110 may extract the shape of the sheet 10 from the image data and analyze the cause of the abnormality according to the position or shape of the extracted sheet. In an embodiment, the processor 110 may extract the shape of the stacking equipment 1 from the image data, compare the shape of the stacking equipment 1 with the shape of the normal state, and analyze the cause of the abnormality.

In addition, the processor 110 may learn the image data through the artificial intelligence model based on the neural network, 3D-model the stacking equipment 1, and compare the 3D model of the stacking equipment with the image data in which the abnormality has been detected. The processor 110 may input the image data into the artificial intelligence model and detect the cause of the abnormality from the image data.

Referring to FIG. 11A, the processor 110 may analyze the image data of the section in which it is determined that the abnormality is present to analyze the cause of the abnormality. The processor 110 may detect the out belt 20 in the first transfer process based on the image data and detect the sheet 10 located on the out belt 20.

In this case, the processor 110 may check that two sheets 71 are supplied through the out belt 20 from the image data. The processor 110 may detect the two sheets through the image data at the time point when the sheet 10 is adsorbed by the PnP device. For example, the processor 110 may detect the out belt 20 based on the image data and then detect that two sheets are moved at the same time.

Referring to FIG. 11B, the processor 110 may analyze the image data to detect the shape of the alignment table 30 at the time point when the sheet transfer is completed and detect the sheet 10 located on the alignment table 30. The processor 110 may detect two sheets 72 transferred to the alignment table 30 and determine the cause of the abnormality. For example, at least one sheet 10 of the two sheets 72 may be partially torn by another obstacle or the like.

Accordingly, the processor 110 may output the analysis result indicating that a process defect has been caused by the double-sheet abnormality.

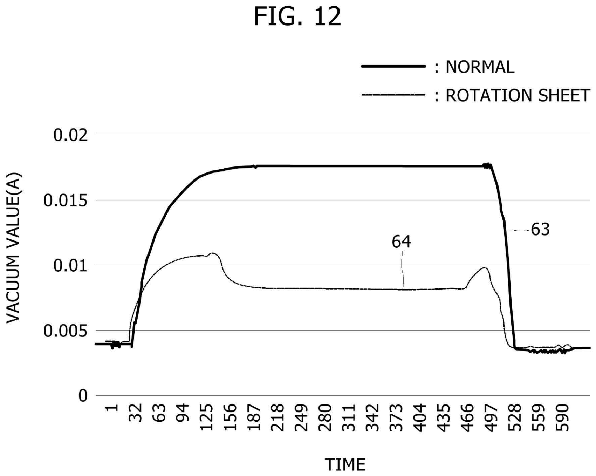

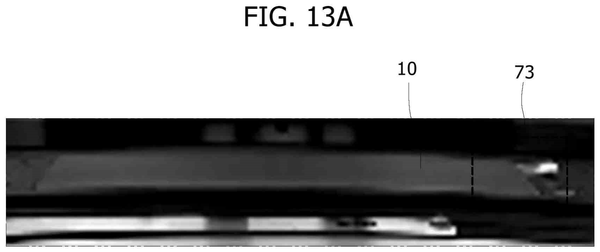

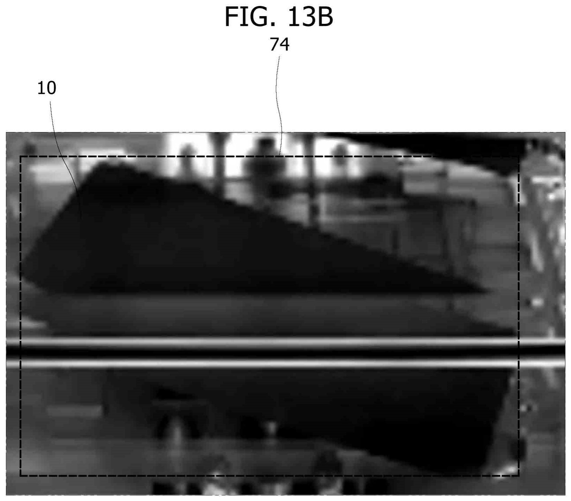

FIG. 12 is a view showing a change in vacuum signal due to sheet rotation according to an embodiment of the present disclosure; and FIGS. 13A and 13B are views showing an equipment state for sheet rotation according to an embodiment of the present disclosure.

Referring to FIG. 12, the processor 110 may determine that a process defect has occurred in a vacuum signal 64 in which the entire signal of one cycle is measured to be smaller than the threshold value compared to a normal vacuum signal 63. In this case, an x-axis of a graph for the vacuum signals 63 and 64 is time, and a y-axis thereof is a vacuum value (current).

Referring to FIG. 13A, the processor 110 may analyze the cause of the abnormality by checking the image data before the PnP device adsorbs the sheet 10. The processor 110 may extract the sheet 10 on the out belt 20 that transfers the sheet 10 and the sheet 10 located on the out belt 20 and check that a tab 73 of the sheet 10 has been lifted.

Referring to FIG. 13B, the processor 110 may detect the out belt 20 or the alignment table 30 based on the image data and detect a sheet 74 rotated at an angle (e.g., a predetermined angle) on the out belt 20 or the alignment table 30.

The processor 110 may determine that the sheet 10 has rotated because the tab of the sheet 10 has been lifted from the out belt 20.

Accordingly, the processor 110 may determine that the sheet has been rotated by the tab lifted from the out belt as the cause of the abnormality and output the analysis result. The processor 110 may output the vacuum signal and the image data together with the analysis result. In an embodiment, the processor 110 may output the stacking equipment 3D-modeled based on the artificial intelligence model together with the analysis result, thereby visualizing the cause of the abnormality.

According to one or more embodiments of the present disclosure, the cause of the abnormality can be accurately detected by checking the state of the stacking equipment based on the image for the abnormality occurring during the sheet transfer process of the secondary battery manufacturing process. According to one or more embodiments of the present disclosure, the abnormality in the stacking equipment can be detected in real time and the abnormal situation can be visually output. According to one or more embodiments of the present disclosure, the process may be prevented or substantially prevented from being stopped by quickly responding to the abnormality in the stacking equipment based on the analysis result to prevent or substantially prevent the process from being stopped.

As used in the specification, the term "unit" may include a unit implemented in hardware, software, or firmware and for example, may be used interchangeably with terms such as a logic, a logic block, a component, or a circuit. The term "unit" may be an integrated component or a minimum unit of the component or a portion thereof that performs one or more functions. For example, according to one or more embodiments, the term "unit" may be implemented in the form of an application-specific integrated circuit (ASIC).

The implementations described in the present specification may be implemented, for example, as a method or process, device, a software program, a data stream, or a signal. Although described in the context of the implementation of a single form (e.g., only a method is described), the implementations of the described features may also be implemented in other forms (e.g., devices or programs). The device may be implemented with appropriate hardware, software, firmware, etc. The method may be implemented by a device such as a processor, which is generally referred to as a processing device including, for example, a computer, a microprocessor, an integrated circuit, a programmable logic device, etc. The processor includes a communication device such as computers, cell phones, portable/personal digital assistants (PDAs), and other devices, which facilitate information communication between end-users.

According to one or more embodiments of the present disclosure, a cause of an abnormality can be accurately detected by checking a state of stacking equipment based on an image for the abnormality occurring during a sheet transfer process of a secondary battery manufacturing process.

According to one or more embodiments of the present disclosure, the abnormality in the stacking equipment can be detected in real time, and an abnormal situation can be visually output.

According to one or more embodiments of the present disclosure, a process may be prevented or substantially prevented from being stopped by quickly responding to the abnormality in the stacking equipment based on an analysis result to prevent or substantially prevent the process from being stopped.

However, aspects and effects that can be achieved through the present disclosure are not limited to the above-described aspects and effects, and other aspects and effects that are not described may be clearly understood by those skilled in the art from the detailed description.

Although the present disclosure has been described with reference to some embodiments and drawings illustrating aspects thereof, the present disclosure is not limited thereto. Various modifications and variations can be made by a person skilled in the art to which the present disclosure belongs within the scope of the claims.

Embodiments are set out in the following numbered clauses:
1. An apparatus for inspecting stacking equipment, comprising:
   a vacuum sensor which is installed on a transfer device of stacking equipment and is configured to detect a vacuum signal representing a degree of adsorption of a sheet;
   a camera configured to capture an image of the stacking equipment; and
   a processor configured to analyze the vacuum signal input in real time during a process in which the sheet is transferred by the transport device to detect an abnormality in a transfer process of the stacking equipment and analyze image data captured by the camera based on a time point when the abnormality is detected to analyze a cause of the abnormality.
2. The apparatus of clause 1, wherein the processor is configured to filter a one-cycle signal of the vacuum signal to extract valid data and calculate at least one of a maximum value, a minimum value, and an average value for the valid data.
3. The apparatus of clause 2, wherein the processor is configured to extract the vacuum signal from a time point when adsorption of the sheet is completed to a time point when the sheet is separated from the transfer device in the transfer process as the valid data.
4. The apparatus of clause 2 or clause 3, wherein the processor is configured to compare one of the maximum value, the minimum value, and the average value with a threshold value and detect the abnormality in the transfer process.
5. The apparatus of clause 4, wherein the processor is configured to determine that the transfer process is normal if one of the maximum value, the minimum value, and the average value is greater than or equal to the threshold value and determine that the transfer process is defective if the one of the maximum value, the minimum value, and the average value is less than the threshold value.
6. The apparatus of any of clauses 2 to 5, wherein the processor is configured to compare the maximum value with a threshold value for the maximum value, compare the minimum value with a threshold value for the minimum value, compare the average value with a threshold value for the average value, and then detect the abnormality in the transfer process based on comparison results.
7. The apparatus of any preceding clause, wherein, if the abnormality in the transfer process is detected, the processor is configured to analyze the image data for a certain time based on the time point when the abnormality is detected, detect a shape of the stacking equipment or the sheet from the image data, and determine the cause of the abnormality.
8. The apparatus of any preceding clause, wherein the processor is configured to analyze a vacuum signal of a first vacuum sensor installed on a first transfer device that transfer the sheet from an out belt to an alignment table and analyze a vacuum signal of a second vacuum sensor installed on a second transfer device that transfers the sheet from the alignment table to a stacking table.
9. The apparatus of any preceding clause, further comprising a signal acquisition device which is connected to the vacuum sensor and configured to process the vacuum signal at high speed,
   wherein the processor is configured to receive the vacuum signal in real time through the signal acquisition device.
10. The apparatus of any preceding clause, wherein the processor is configured to generate a 3D modeling based on a neural network model using the vacuum signal and data of the stacking equipment, and, if the abnormality is detected, the processor visualizes and outputs states of the stacking equipment and the sheet through the 3D modeling.
11. A method of inspecting stacking equipment, the method comprising:
   analyzing, by a processor, a vacuum signal input in real time from a vacuum sensor installed on stacking equipment during a process of transferring a sheet;
   detecting, by the processor, an abnormality in a transfer process of the stacking equipment based on an analysis result of the vacuum signal; and
   analyzing, by the processor, image data captured by a camera based on a time point when the abnormality has been detected to analyze a cause of the abnormality.
12. The method of clause 11, wherein the analyzing of the vacuum signal comprises:
   analyzing, by the processor, a vacuum signal of a first vacuum sensor installed on a first transfer device that transfers the sheet from an out belt to an alignment table; and
   analyzing, by the processor, a vacuum signal of a second vacuum sensor installed on a second transfer device that transfers the sheet from the alignment table to a stacking table.
13. The method of clause 12, wherein, in the analyzing of the vacuum signal,
   the processor receives the vacuum signal in real time from a signal acquisition device which is connected to the vacuum sensor and processes the vacuum signal at high speed.
14. The method of any of clauses 11 to 13, wherein the analyzing of the vacuum signal comprises:
   filtering, by the processor, a one-cycle signal of the vacuum signal and extracting valid data; and
   calculating, by the processor, at least one of a maximum value, a minimum value, and an average value for the valid data.
15. The method of clause 14, wherein, in the extracting of the valid data,
   the processor extracts the vacuum signal from a time point when adsorption of the sheet is completed to a time point when the sheet is separated from the first transfer device or the second transfer device in the transfer process as the valid data.
16. The method of clause 14 or clause 15, wherein, in the detecting of the abnormality in the transfer process,
   the processor compares one of the maximum value, the minimum value, and the average value with a threshold value and detects the abnormality in the transfer process.
17. The method of any of clauses 14 to 16, wherein, in the detecting of the abnormality in the transfer process,
   the processor determines that the transfer process is normal if one of the maximum value, the minimum value, and the average value is greater than or equal to the threshold value and determines that the transfer process is defective if the one of the maximum value, the minimum value, and the average value is less than the threshold value.
18. The method of any of clauses 14 to 17, wherein, in the detecting of the abnormality in the transfer process,
   the processor compares the maximum value with a threshold value for the maximum value, compares the minimum value with a threshold value for the minimum value, compares the average value with a threshold value for the average value, and then detects the abnormality in the transfer process based on comparison results.
19. The method of any of clauses 11 to 18, wherein the analyzing of the cause of the abnormality comprises:
   analyzing, by the processor, the image data for a certain time based on the time point when the abnormality is detected when the abnormality in the transfer process is detected;
   detecting, by the processor, a shape of the stacking equipment or the sheet from the image data; and
   determining, by the processor, a cause of the detected abnormality based on the shape of the stacking equipment or the sheet.
20. The method of any of clauses 11 to 19, wherein, in the analyzing of the cause of the abnormality,
   the processor generates a 3D modeling based on a neural network model using the vacuum signal and data of the stacking equipment, and if the abnormality is detected, the processor visualizes and outputs states of the stacking equipment and the sheet through the 3D modeling.

## Claims

1. An apparatus for inspecting stacking equipment, comprising:
a vacuum sensor which is installed on a transfer device of stacking equipment and is configured to detect a vacuum signal representing a degree of adsorption of a sheet;
a camera configured to capture an image of the stacking equipment; and
a processor configured to analyze the vacuum signal input in real time during a process in which the sheet is transferred by the transport device to detect an abnormality in a transfer process of the stacking equipment and analyze image data captured by the camera based on a time point when the abnormality is detected to analyze a cause of the abnormality.

2. The apparatus as claimed in claim 1, wherein the processor is configured to filter a one-cycle signal of the vacuum signal to extract valid data and calculate at least one of a maximum value, a minimum value, and an average value for the valid data.

3. The apparatus as claimed in claim 2, wherein the processor is configured to extract the vacuum signal from a time point when adsorption of the sheet is completed to a time point when the sheet is separated from the transfer device in the transfer process as the valid data.

4. The apparatus as claimed in claim 2 or claim 3, wherein the processor is configured to compare one of the maximum value, the minimum value, and the average value with a threshold value and detect the abnormality in the transfer process.

5. The apparatus as claimed in claim 4, wherein the processor is configured to determine that the transfer process is normal if one of the maximum value, the minimum value, and the average value is greater than or equal to the threshold value and determine that the transfer process is defective if the one of the maximum value, the minimum value, and the average value is less than the threshold value.

6. The apparatus as claimed in any of claims 2 to 5, wherein the processor is configured to compare the maximum value with a threshold value for the maximum value, compare the minimum value with a threshold value for the minimum value, compare the average value with a threshold value for the average value, and then detect the abnormality in the transfer process based on comparison results.

7. The apparatus as claimed in any preceding claim, wherein, if the abnormality in the transfer process is detected, the processor is configured to analyze the image data for a certain time based on the time point when the abnormality is detected, detect a shape of the stacking equipment or the sheet from the image data, and determine the cause of the abnormality.

8. The apparatus as claimed in any preceding claim, wherein the processor is configured to analyze a vacuum signal of a first vacuum sensor installed on a first transfer device that transfer the sheet from an out belt to an alignment table and analyze a vacuum signal of a second vacuum sensor installed on a second transfer device that transfers the sheet from the alignment table to a stacking table.

9. The apparatus as claimed in any preceding claim, further comprising a signal acquisition device which is connected to the vacuum sensor and configured to process the vacuum signal at high speed,
wherein the processor is configured to receive the vacuum signal in real time through the signal acquisition device.

10. The apparatus as claimed in any preceding claim, wherein the processor is configured to generate a 3D modeling based on a neural network model using the vacuum signal and data of the stacking equipment, and, if the abnormality is detected, the processor visualizes and outputs states of the stacking equipment and the sheet through the 3D modeling.

11. A method of inspecting stacking equipment, the method comprising:
analyzing, by a processor, a vacuum signal input in real time from a vacuum sensor installed on stacking equipment during a process of transferring a sheet;
detecting, by the processor, an abnormality in a transfer process of the stacking equipment based on an analysis result of the vacuum signal; and
analyzing, by the processor, image data captured by a camera based on a time point when the abnormality has been detected to analyze a cause of the abnormality.

12. The method as claimed in claim 11, wherein the analyzing of the vacuum signal comprises:
analyzing, by the processor, a vacuum signal of a first vacuum sensor installed on a first transfer device that transfers the sheet from an out belt to an alignment table; and
analyzing, by the processor, a vacuum signal of a second vacuum sensor installed on a second transfer device that transfers the sheet from the alignment table to a stacking table.

13. The method as claimed in claim 12, wherein, in the analyzing of the vacuum signal,
the processor receives the vacuum signal in real time from a signal acquisition device which is connected to the vacuum sensor and processes the vacuum signal at high speed.

14. The method as claimed in any of claims 11 to 13, wherein the analyzing of the vacuum signal comprises:
filtering, by the processor, a one-cycle signal of the vacuum signal and extracting valid data; and
calculating, by the processor, at least one of a maximum value, a minimum value, and an average value for the valid data.

15. The method as claimed in any of claims 11 to 14, wherein the analyzing of the cause of the abnormality comprises:
analyzing, by the processor, the image data for a certain time based on the time point when the abnormality is detected when the abnormality in the transfer process is detected;
detecting, by the processor, a shape of the stacking equipment or the sheet from the image data; and
determining, by the processor, a cause of the detected abnormality based on the shape of the stacking equipment or the sheet.
